# EUROPÄISCHE PATENTSCHRIFT

(11) **EP 1 055 089 B1**
(45) Veröffentlichungstag und Bekanntmachung des Hinweises auf die Patenterteilung: **15.05.2002**
(21) Anmeldenummer: 99910215.5
(22) Anmeldetag: 10.02.1999
(51) Int. Cl.: F25D 17/04, F25D 25/00

(54) **BEHÄLTER ZUR EINLAGERUNG VON NAHRUNGSMITTELN**
CONTAINER FOR STORING FOOD
CONTENANT POUR LE STOCKAGE DE PRODUITS ALIMENTAIRES

(30) Priorität: 13.02.1998 DE 19806041
(43) Veröffentlichungstag der Anmeldung: 29.11.2000
(73) Patentinhaber: BSH Bosch und Siemens Hausgeräte GmbH, 81669 München (DE)
(72) Erfinder: TRÄNKLER, Hans-Rolf, D-82031 Grünwald (DE)
(86) Internationale Anmeldenummer: EP9900871
(87) Internationale Veröffentlichungsnummer: WO9941556

(56) Entgegenhaltungen:
- EP-A- 0 189 207
- EP-A- 0 352 475
- EP-A- 0 535 519
- EP-A- 0 540 873
- EP-A- 0 592 003
- WO-A-95/27238
- FR-A- 2 488 500
- GB-A- 539 735
- US-A- 5 477 699

## Beschreibung

Die Erfindung betrifft einen Behälter zur Einlagerung von Nahrungsmitteln gemäß dem Oberbegriff des Anspruchs 1. Ein solcher Behälter ist z.B. aus der WO-A-95/27238 bekannt.

Es ist bekannt, daß Nahrungsmittel wie beispielsweise Obst, Gemüse, Fleisch, Backwaren oder dergleichen während ihrer Lagerzeit, je nach den Lagerbedingungen, denen sie unterliegen, in den überwiegenden Fällen meist gleichzeitig verschiedensten Einflüssen, mikrobieller, enzymatischer, chemischer oder physikalischer Art unterworfen sind. Derartige Einflüsse auf die Nahrungsmittel, welche beispielsweise einerseits auf eine zu hohe oder zu geringe Feuchte oder aber eine zu hohe Sauerstoffkonzentration im Lagerraum der Nahrungsmittel zurückzuführen sind und andererseits aber auch infolge der Atmungsaktivität von Frischprodukten, wie Obst hervorgerufenen Gasabgabe wie beispielsweise Ethen, verursacht werden, vermindern nicht nur das Aussehen sondern auch die Qualität des eingelagerten Nahrungsmittels nachhaltig. So kann es z.B. vorkommen, daß Frischprodukte, wie Salate, Gemüse, Obst oder dergleichen, bei einer zu geringen Feuchte im Lagerraum insbesondere bei Kaltlagerung einem verstärkten Austrockeneffekt unterliegen, welcher beispielsweise bei Salaten zum Welkwerden führt, während er an Obst Schrumpfstellen an der Obstschale zur Folge hat. Dagegen führt eine zu hohe Feuchte im Lagerraum dazu, daß das Wachstum von sogenannten Mikroorganismen begünstigt wird, durch deren Zersetzungsprodukte das Kühlgut nicht nur hinsichtlich Geruch, Geschmack, Farbe und Festigkeit sondern auch biologisch verändert wird (z.B. Gehalt an Vitaminen), wodurch die Nahrungsmittel in Fäulnis übergehen oder verschimmeln und somit ungenießbar werden. Bei einer Einlagerung von sogenannten toten Produkten wie Fisch oder Fleisch, kann es insbesondere infolge eines zu geringen Sauerstoffgehaltes im Lagerraum und in Verbindung mit dem hohen Sauerstoffverbrauch von Mikroorganismen zu einer stark einsetzenden Metmyoglobin-Bildung kommen, wodurch sich das eingelagerte Fleisch braun verfärbt und unansehnlich wird.

Der Erfindung liegt die Aufgabe zugrunde, bei einem Behälter gemäß dem Oberbegriff des Anspruches 1 Maßnahmen vorzuschlagen, mit welchen die Lagerbedingungen für die darin eingelagerten Nahrungsmittel entscheidend verbessert werden.

Diese Aufgabe wird gemäß der Erfindung durch die Merkmale des Anspruchs 1 gelöst.

Durch die Erfassung des im Behälterraum herrschenden Klimas, d.h. der darin herrschenden Luftzusammensetzung und Feuchte und der damit verbundenen Einflußnahme auf die freie Luftdurchlaßfläche der Öffnung anhand des Verschlußelementes ist innerhalb des Behälterraumes ein Kleinklima erzeugbar, welches dem vorzeitigen Unansehnlichwerden durch die aufgezeigten Einflüsse mikrobieller, enzymatischer, chemischer oder physikalischer Art entgegentritt, so daß die ursprüngliche Qualität des Nahrungsmittels wie beispielsweise Obst, Gemüse, Fleisch oder Backwaren über einen vergleichbar langen Zeitraum ohne die Überwachung des Kleinklimas durch eine Bedienperson erhalten bleibt.

Nach einer bevorzugten Ausführungsform des Gegenstandes der Erfindung ist vorgesehen, daß die Mittel zur Erfassung des Klimas im Nahbereich der Öffnung im Behälterinnenraum angeordnet sind.

Durch die Anordnung der Mittel im Nahbereich der Behälteröffnung läßt sich auf besonders einfache und exakte Weise die aus dem Behälterraum austretende Luftzusammensetzung und Feuchte ermitteln und auswerten, und somit anhand dieser gewonnenen Werte und deren Vergleich mit z.B. empirisch ermittelten Referenzwerten ein dem Lagergut förderliches Kleinklima im Behälterraum durch Stellung des Verschlußelementes einstellen.

Besonders genau über den gesamten Behälterraum erfassen und in einem Art Regelprozeß einstellen läßt sich das darin herrschende Kleinklima hinsichtlich seiner Zusammensetzung aufgrund der durch die Mehrfacherfassung möglichen Mittelwertbildung der erfaßten Daten, wenn nach einer altemativen Ausführungsform des Gegenstandes der Erfindung vorgesehen ist, daß die Mittel zur Erfassung des Klimas im Behälterinnenraum verteilt angeordnet sind.

Gemäß einer nächsten bevorzugten Ausführungsform des Gegenstandes der Erfindung ist vorgesehen, daß neben den Mitteln zur Erfassung des Klimas im Behälterraum weitere Mittel vorgesehen sind. welche das Umgebungsklima des Behälters zu erfassen vermögen.

Durch die Erfassung und Auswertung des Umgebungsklimas des Behälters ist auf einfache Weise feststellbar, welches der beiden Klimata, nämlich das Kleinklima im Behälterraum oder das Umgebungsklima des Behälters, der vorzeitigen Qualitätseinbuße der eingelagerten Nahrungsmittel mehr entgegenwirkt, um gegebenenfalls einen vollkommenen Luftaustausch innerhalb des Lagerraumes herbeizuführen oder aber einen Luftaustausch mit der Umgebungsluft des Behälters zu verhindern.

Besonders zielgerichtet und genau erfaßt werden kann die in den Behälterraum einströmende Luft hinsichtlich ihrer Zusammensetzung und Feuchte, wenn nach einer nächsten vorteilhaften Ausgestaltung des Gegenstandes der Erfindung vorgesehen ist, daß die weiteren Mittel an der vom Behälterraum abgewandten Außenseite des Behälters, zumindest im Nahbereich der vom Verschlußelement veränderbaren Luftdurchlaßfläche angeordnet sind.

Entsprechend einer alternativen Ausführungsform des Gegenstandes der Erfindung ist vorgesehen, daß die weiteren Mittel verteilt im nahen Außenbereich des Behälters angeordnet sind.

Durch die Erfassung des Umgebungsklimas des Behälters an verschiedenen Umgebungsbereichen läßt sich durch Mittelwertbildung die wahrscheinlichste Zusammensetzung des Umgebungsklimas ermitteln und daraus gezielt die Steuerwerte zur Ansteuerung der Verschlußelemente herleiten.

Nach einer nächsten bevorzugten Ausführungsform des Gegenstandes der Erfindung ist vorgesehen, daß die Mittel und die weiteren Mittel zur Erfassung des Klimas bzw. des Umgebungsklimas Gas-, Feuchte- und Temperatursensoren umfassen.

Durch eine derartige Zusammensetzung der Sensorik lassen sich die wesentlichen Einflußfaktoren auf die Qualität des eingelagerten Nahrungsmittels mit relativ geringem Aufwand sicher erfassen.

Gemäß einer weiteren bevorzugten Ausführungsform des Gegenstandes der Erfindung ist vorgesehen, daß die Gassensoren als wenigstens Sauerstoff und Kohlendioxid zu erfassen vermögende Sensoren ausgebildet sind.

Durch den Einsatz derartiger Sensoren lassen sich die Anteile in der Luft des Lagerraumklimas erfassen, aufgrund welcher sich auf eine vorzeitige Qualitätseinbuße des Lagergutes schließen läßt. So kann durch die Erfassung der Sauerstoffkonzentration in der Lagerluft des Kleinklimas im Behälterraum eine vorzeitige Schimmelbildung am eingelagerten Nahrungsmittel, hervorgerufen durch eine zu hohe Sauerstoffkonzentration, in der Lagerluft vermieden werden. Darüber hinaus ist durch eine erhöhte Konzentration des Kohlendioxidgehalts in der Lagerraumluft des Kleinklimas im Behälter die Atmungsintensität von Frischprodukten, wie Salaten, Gemüse und Obst oder dergleichen, deutlich herabgesenkt und somit deren Lagerfähigkeit wesentlich verbessert, wobei die Atmungsaktivität zusätzlich durch eine Absenkung der Temperatur in einem Bereich um 4°C noch deutlich reduziert werden kann.

Entsprechend einer nächsten bevorzugten Ausführungsform des Gegenstandes der Erfindung ist vorgesehen, daß die Gassensoren als Halbleiterbauelemente oder Infrarotstrahlung absorbierende Bauelemente ausgebildet sind.

Derartige Bauelemente sind nicht nur äußerst kostengünstig, sondern auch aufgrund ihrer geringen Baugröße äußerst platzsparend und unauffällig, sowohl innerhalb des Behälterraumes als auch in dessen Umgebung zur Erfassung des Umgebungsklimas anbringbar. Darüber hinaus lassen sich die von derartigen Bauelementen erfaßten Daten besonders einfach durch eine elektronische Auswerteeinheit bewerten und verarbeiten.

Die gleichen Vorzüge wie die zum Einsatz gebrachten Gassensoren weisen Sensoren zur Erfassung der Temperatur auf, wenn nach einer weiteren vorteilhaften Ausgestaltung des Gegenstandes der Erfindung vorgesehen ist, daß die Mittel zur Erfassung der Temperatur als Halbleiterbauelemente ausgebildet sind.

Besonders kostengünstig sind Mittel zur Erfassung der Feuchte, wenn nach einer weiteren bevorzugten Ausführungsform des Gegenstandes der Erfindung vorgesehen ist, daß die Mittel zur Erfassung der Feuchte als Impedanzsensoren ausgebildet sind.

Besonders exakt erfaßt wird die Feuchte aufgrund der proportionalen Umsetzung der erfaßten Daten in ein Ausgangssignal, wenn nach einer weiteren bevorzugten Ausführungsform des Gegenstandes der Erfindung vorgesehen ist, daß die Mittel zur Erfassung der Feuchte als poröse Festkörper-Dielektrika ausgebildet sind.

Nach einer nächsten bevorzugten Ausführungsform des Gegenstandes der Erfindung ist vorgesehen, daß neben den Mitteln zur Erfassung des Raumklimas im Behälterraum wenigstens ein Geruchssensor zur Erfassung von Gerüchen im Behälterraum vorgesehen ist.

Hier können Geruchssensoren zum Einsatz kommen, deren Datenerfassung auf einer Frequenzmessung mit einem piezoelektrischen Schwingquarzsensor beruht, wobei hier die Verstimmung der Resonanzfrequenz ausgewertet wird. Durch den Einsatz eines Geruchssensors läßt sich über die Datenauswerteeinheit bereits der Verderbprozeß des Nahrungsmittels beispielsweise infolge einer Fäulnisbildung erfassen und einer Bedienperson anzeigen.

Besonders platzsparend und energetisch günstig sind die Antriebsmittel zur Betätigung des Verschlußelements, wenn nach einer weiteren bevorzugten Ausführungsform des Gegenstands der Erfindung vorgesehen ist, daß die Antriebsmittel zur Betätigung des Verschlußelementes durch einen Mikroaktor gebildet sind. Hierbei können neben translatorischen auch rotatorische Abtriebe des Mikroaktors Anwendung finden. Ferner ist es vorstellbar, auch Piezo-Motoren, elektrochemische Antriebe aber auch Schrittmotoren zum Einsatz zu bringen.

Nicht nur besonders definiert bewegen läßt sich das Verschlußelement, sondern auch dessen Momentanposition besonders genau erfassen, wenn nach einer nachsten vorteilhaften Ausgestaltung des Gegenstandes der Erfindung vorgesehen ist, daß der Mikroaktor hinsichtlich seiner Verstellbewegung durch Positionssensoren überwacht ist.

Nach einer weiteren bevorzugten Ausführungsform des Gegenstandes der Erfindung ist vorgesehen, daß die Positionssensoren dem Mikroaktor zugeordnet sind.

Hierdurch ergibt sich ein besonders kompakter Aufbau aus Antrieb und Positionssensorik.

Einerseits besonders platzsparend und andererseits besonders einfach montierbar sind die Mittel zur Erfassung des Raumklimas und die weiteren Mittel zur Erfassung des Umgebungsklimas, wenn nach einer nächsten vorteilhaften Ausgestaltung des Gegenstandes der Erfindung vorgesehen ist, daß die Mittel zur Erfassung des Raumklimas im Behälterinnenraum und/oder die weiteren Mittel zur Erfassung des Umgebungsklimas mit den Antriebsmitteln eine Baueinheit bilden.

Entsprechend einer nächsten bevorzugten Ausführungsform des Gegenstandes der Erfindung ist vorgesehen, daß die Baueinheit bestehend aus den Antriebsmittein, den Mitteln zur Erfassung des Raumklimas und den weiteren Mitteln zur Erfassung des Umgebungsklimas lösbar am Behälter angeordnet ist.

Durch eine derartige Lösung ist die Möglichkeit gegeben, die Baueinheit im Schadensfall in Art eines Modules auszutauschen. Genauso besteht die Möglichkeit einen Behälter mit einer derartigen Baueinheit nachzurüsten.

Gemäß einer nächsten bevorzugten Ausführungsform des Gegenstandes der Erfindung mit einer durch eine verschwenkbare Klappe abgedeckten Öffnung ist vorgesehen, daß die Baueinheit am Öffnungsrand des Behälters lösbar gehaltert und die Öffnung durch das Verschwenken der Klappe erzeugt ist.

Hierdurch ergibt sich die Möglichkeit einen herkömmlichen Behälter wie beispielsweise einen Brotkasten oder dergleichen mit der Baueinheit nachzurüsten, wodurch der herkömmliche Behälter und die damit verbundene Güte seiner Lagerbedingungen deutlich aufgewertet werden.

Gemäß einer weiteren bevorzugten Ausführungsform des Gegenstandes der Erfindung ist vorgesehen, daß die Öffnung im Behälter durch zumindest in annähernd gleichen Winkelabständen voneinander beabstandete kreissektorförmige Aussparungen gebildet ist.

Infolge der kreissektorförmigen, einen genügend großen Luftdurchlaßquerschnitt ermöglichenden Aussparungen ist diejenige Behälterwandung, welche mit einer derartigen Öffnung versehen ist, hinsichtlich ihrer Stabilität und Formsteifigkeit unbeeinträchtigt.

Besonders feinfühlig und definiert einstellbar ist die wirksame Luftdurchlaßfläche, wenn nach einer nächsten bevorzugten Ausführungsform des Gegenstandes der Erfindung vorgesehen ist, daß die kreissektorförmigen Aussparungen durch kreissektorförmige, an einem als Verschlußelement dienenden scheibenartigen Halter angeordnete Abdeckelemente abdeckbar sind.

Eine besonders rasche und intensive Durchlüftung des Behälterraumes läßt sich erzielen, wenn nach einer weiteren vorteilhaften Ausführungsform des Gegenstandes der Erfindung vorgesehen ist, daß neben der mit einer veränderbaren Luftdurchlaßfläche ausgestatteten Öffnung eine weitere Öffnung am Behälter vorgesehen ist.

Besonders unauffällig und dennoch zielführend hinsichtlich einer ausreichenden raschen Belüftung des Behälterraumes ausgebildet ist die weitere Öffnung, wenn nach einer nächsten vorteilhaften Ausgestaltung des Gegenstandes der Erfindung vorgesehen ist, daß die weitere Öffnung einen bezüglich der veränderbaren Öffnung verkleinerten Öffnungsquerschnitt aufweist.

Gemäß einer nächsten bevorzugten Ausführungsform des Gegenstandes der Erfindung ist vorgesehen, daß die weitere Öffnung durch ein von einem Antriebsmittel betätigtes Verschlußelement abdeckbar ist, wobei das Antriebsmittel von der Datenauswerteeinheit gesteuert ist.

Hierdurch ist eine unabhängig von einer Bedienperson ausschließlich durch objektive Kriterien, ermittelt durch die Sensoren zur Erfassung des Kleinklimas im Behälterraum und der Sensoren zur Erfassung des Umgebungsklimas, die Einstellung des Verschlußelementes bewirkt, wodurch sich eine auf das eingelagerte Nahrungsmittel hin optimierte Veränderung des Lagerraumklimas rasch und zielgerichtet herbeiführen läßt.

Nach einer nächsten bevorzugten Ausführungsform des Gegenstandes der Erfindung ist vorgesehen, daß die Auswerteeinheit als programmierbarer Mikrocomputer ausgebildet ist.

Eine derartige Auswerteeinheit läßt sich rasch und kostengünstig auf die für die verschiedenen Nahrungsmittel optimalen Lagerbedingungen ausrichten.

Nach einer weiteren bevorzugten Ausführungsform des Gegenstandes der Erfindung ist vorgesehen, daß der Mikrocomputer mit einem Eingabemodul datentechnisch verbunden ist, mit welchem die Art des einzulagernden Nahrungsmittels anhand von kennzeichnenden Eckdaten in den Mikrocomputer eingebbar sind und daß der Mikrocomputer nach einem Vergleich der eingegebenen Daten mit in einer Speichereinheit des Mikrocomputers hinterlegten Referenzdaten die Einstellung des Verschlußelementes selbsttätig steuert.

Hierdurch ist einer Bedienperson die Möglichkeit verschafft, die Art des eingelagerten Gutes in den Mikrocomputer einzugeben oder einzulesen, so daß für jedes der eingelagerten Nahrungsmittel ohne Einflußnahme der Bedienperson die optimalen Lagerbedingungen für das einzulagernde Nahrungsmittel im Vorfeld bestimmbar sind und während der Einlagerzeit durch die selbsttätige, die Art des eingelagerten Produktes berücksichtigende Verstellung des Verschlußelementes aufrechterhaltbar sind.

Besonders energiesparend betrieben sind die Datenauswerteeinheit und die Antriebsmittel, wenn nach einer nächsten vorteilhaften Ausführungsform des Gegenstandes der Erfindung vorgesehen ist, daß die Datenauswerteeinheit und die Antriebsmittel durch wenigstens eine Solarzelle mit elektrischer Spannung versorgt sind. Eine derartige Ausführung läßt sich besonders zweckmäßig bei von anderen Gerätschaften unabhängigen Bevorratungseinrichtungen wie Brotkästen, Obstbevorratungskästen einsetzen.

Nach einer weiteren bevorzugten Ausführungsform des Gegenstandes der Erfindung ist vorgesehen, daß die Solarzelle an einen Akkumulator angeschlossen ist, welcher für die von der Solarzelle erzeugten Energie als Zwischenpuffer dient.

Durch eine derartige Ausführungsform ist dafür Sorge getragen, daß für den Fall, daß die Solarzelle aufgrund der momentanen Lichteinstrahlung nicht in der Lage ist, die elektrische Energie für die elektrisch betriebenen Bauteile des Behälters wie die Datenauswerteeinheit, die Antriebsmittel und deren Leistungselektronik bereitzustellen, die Energiezufuhr zu diesen Baueinheiten zu sichern.

Besonders zweckmäßig hinsichtlich seiner Einlagerbedingungen ausgestattet ist ein Kältegerät mit einem wärmeisolierenden Gehäuse und wenigstens einem darin angeordneten, von einer wärmeisolierten Tür verschließbaren Kühlraum ausgebildet, wenn nach einer letzten bevorzugten Ausführungsform des Gegenstandes der Erfindung vorgesehen ist, daß der Kühlraum mit einem Behälter nach einem der Ansprüche 1 bis 26 ausgestattet ist.

Durch den Einsatz eines erfindungsgemäßen Behälters im Kühlraum eines Kältegerätes ist zusätzlich noch die Lagerfähigkeit des eingelagerten Nahrungsmittels durch die Kühlluft verbessert.

Die Erfindung ist in der nachfolgenden Beschreibung am Beispiel eines in den beigefügten Zeichnungen vereinfacht dargestellten Haushaltskühlschrankes erläutert.

Es zeigen:
- Fig. 1: einen Haushaltstischkühlschrank mit an seinem Kühlraumboden abgestellten, teilweise aufgebrochen dargestellten Behälter, an dessen Rückwand eine von einem Verschlußelement verschließbare Öffnung und eine zur Ansteuerung des Verschlußelementes dienende Steuereinheit mit Sensorik vorgesehen ist, in raumbildlicher Ansicht von vorne,
- Figur 2: den Behälter ausschnittsweise in Schnittdarstellung, mit dem Verschlußelement und der eine behälterraumseitige und eine behälteraußenseitige Sensorik umfassenden, gegebenenfalls von einer Solarzelle gespeisten Steuereinheit, in raumbildlicher Ansicht von vorne und
- Figur 3: die Steuereinheit gemäß Figur 2 um 90° gedreht dargestellt, mit der sowohl im Behälterraum als auch der außenseitig am Behälterraum angeordneten Sensorik ein raumbildlicher Ansicht von vorne.

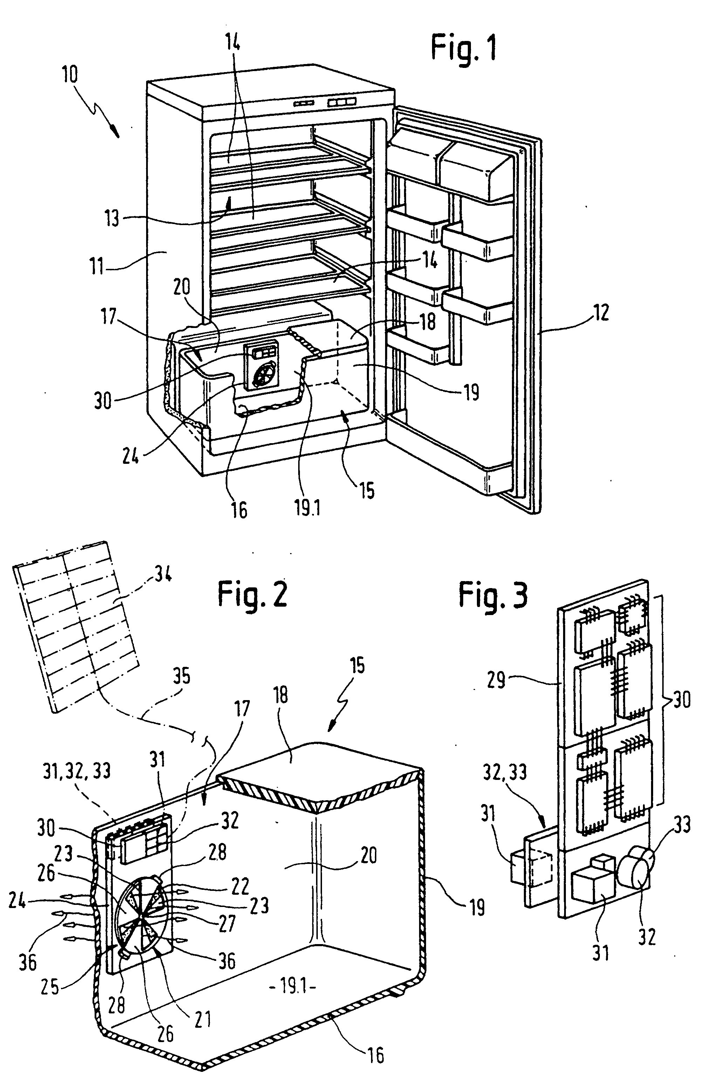

Gemäß Figur 1 ist ein Haushaltstischkühlschrank 10 gezeigt, an dessen wärmeisolierend ausgebildeten Gehäuse 11 eine im geöffneten Zustand dargestellte Tür 12 verschwenkbar gelagert ist. Die Tür 12 dient zum wärmeisolierenden Verschließen eines innerhalb des Gehäuses 11 angeordneten Kühlraumes 13, welcher mit seinen Seitenwänden gehalterten, in annähernd gleichen Abständen übereinander angeordneten Kühlgutablagen 14 ausgestattet ist. Unterhalb der am tiefsten angeordneten Kühlgutablage 14 ist mit Abstand zu dieser ein am Boden des Kühlraumes 13 abgestellter, zur Einlagerung von Nahrungsmitteln wie Obst, Gemüse, Fleisch oder dergleichen dienender Behälter 15 vorgesehen, welcher auf der seinem Behälterboden 16 gegenüberliegenden Seite eine Beschickungsöffnung 17 aufweist, welche durch eine abnehmbare Behälterabdeckung 18 luftdicht verschließbar ist. Die Beschickungsöffnung 17 ist hinsichtlich ihrer Größe durch den freien Rand einer umlaufend auf dem Behälterboden 16 errichteten, beispielsweise einstückig mit dieser verbundenden Behälterwandung 19 begrenzt, welche einen Behälterraum 19.1 umgrenzt. Die Behälterwandung 19 ist an ihrem der Tür 12 gegenüberliegenden angeordneten rückwärtigen Wandungsabschnitt 20 mit einer kreisförmigen Öffnung 21 versehen, deren Öffnungsfläche durch in gleichmäßigen Winkelabständen voneinander beabstandeten Kreissektorelementen 22 unterbrochen ist, so daß sich zwischen diesen kreissektorförmige Aussparungen 23 ergeben, welche in Summe den Öffnungsquerschnitt der Öffnung 21 ausmachen. Diese Aussparungen 23 sind hinsichtlich ihres Öffnungsquerschnittes durch eine auf einer Trägerplatine 24 angeordneten scheibenförmigen, als Verschlußelement dienende Blendeneinrichtung 25 verschließbar, wobei zum Verschließen der Aussparungen 23 kreissektorförmige Abdeckelemente 26 vorgesehen sind, deren Abdeckfläche wenigstens der öffnungsfläche der Aussparungen 23 entspricht. Die scheibenartige Blendeneinrichtung 25 ist auf der Trägerplatine 24 auf einer Drehachse 27 drehbar gelagert und anhand von elektrisch angesteuerter Antriebsmitteln 28 wie einen Schritt-, einen Gleichstrom - oder Piezomotor oder aber auch durch einen elektrochemisch betriebenen Aktor oder einen Mirkomotor mit rotatorisch bewegter Abtriebsachse angetrieben. Die Bewegung der Blendeneinrichtung 25 ist im Falle ihres Antriebs anhand eines Gleichstrommotors, eines elektro-chemischen Aktors bzw. eines Piezomotors oder eines Mikromotors anhand nicht näher dargestellter Positionssensoren positionsüberwacht, wobei die Positionssensoren sowohl dem Antriebsmittel 28 als auch der Blendeneinrichtung 25 zugeordnet sein können. Im Falle eines Antriebs anhand eines Schrittmotors ergibt sich die Positionsüberwachung der Blendeneinrichtung 25 durch die Überwachung der am Schrittmotor eingeleiteten Antriebsschritte.

Die Antriebsmittel 28 sind von einer nicht näher beschriebenen Motorsteuerung angetrieben, welche auf einer als Leiterplatte 29 ausgebildeten Platine angeordnet ist und Bestandteil einer auf der Leiterplatte 29 verschalteten Datenauswerteeinheit 30 ist, welche auch die von den Positionssensoren abgegebenen Signale verarbeitet und auswertet und basierend auf diesen Signalen gegebenenfalls die Motorsteuerung zum Betreiben der Antriebsmittel 28 ansteuert. Die Datenauswerteeinheit 30 dient ferner zur Verarbeitung von Signalen, welche von zur Erfassung des Klimas im Behälterraum des Behälters 15 angeordneten Sensorik abgegeben werden, welche wenigstens einen beispielsweise als Impedanzsensor ausgebildeten Feuchtesensor 31 einen z.B. als Halbleiter ausgebildeten Temperatursensor 32 und einen zur Erfassung von Sauerstoff und Kohlendioxid geeigneten, z.B. als Halbleiterbauelement ausgebildeten Gassensor 33 umfaßt. Ferner sind weitere, zu den Sensoren Sensoren 31 bis 33 identische Sensoren zur Erfassung des den Behälter 15 umgebenden Umgebungsklimas auch an der vom Behälterraum 20 abgewandten Außenseite des Wandungsabschnitts 20 angeordnet und liegen aus Gründen der elektrischen Verschaltung den im Behälterraum angeordneten Sensoren 31 bis 33 unmittelbar gegenüber. Die Sensoren an der Außenseite des Wandungsabschnitts 20 sind wie die Sensoren 31 bis 33 mit der Datenauswerteeinheit 30, welche beispielsweise als Mikrocomputer ausgebildet sein kann, datentechnisch verschaltet. Die Datenauswerteeinheit 30 ist im Falle ihres Einbaus in den Kühlraum 13 von einer nicht gezeigten Spannungsversorgung gespeist. Für den Fall, daß der Behälter 15 als autarker Vorratsbehälter betrieben ist, besteht zusätzlich neben der Möglichkeit einer herkömmlichen Spannungsversorgung die Möglichkeit, die Spannungsversorgung der Datenauswerteeinheit 30 durch eine in strichpunktierten Linien skizzierte Solarzelle 34 sicherzustellen, welche über eine Vorsorgungsleitung 35 mit dem Behältern 15 verbunden ist und welche zur Überbrückung der Zeitdauer wenig intensiver Lichteinstrahlung auf sie, an einem nicht näher dargestellten Akkumulator angekoppelt ist.

Die Datenauswerteeinheit 30 steuert in Abhängigkeit sowohl des im Behälterraum 19.1 des Behälters 15 durch die Sensoren 31 bis 33 erfaßten Raumklimas als auch in Abhängigkeit des den Behälter 15 umgebenden, ebenfalls von Sensoren 31 bis 33 erfaßten Umgebungsklimas die Antriebsmittel 28 zur Beeinflußung der wirksamen Luftdurchlaßfläche der Aussparungen 23 mittels der Abdeckelemente 26 an der Blendeneinrichtung 25 zur Herbeiführung eines durch Pfeile 36 symbolisch angedeuteten Luftaustausches zwischen dem Innenraum des Behälters 15 und der dem Behälter 15 umgebenden Umgebungsluft. Durch die sich selbsttätig steuernde Luftaustauschfläche an der Öffnung 21 ergibt sich für im Behälter 15 angeordnete Nahrungsmittel gleicher oder unterschiedlicher Art ein Kleinklima im Behälterraum 19.1, welches sich insbesondere bei einer Art von Nahrungsmittel besonders zielgerichtet lagergutspezifisch einstellen läßt und welches sich im vorliegenden Fall ohne aktive Pumpmechanismen, lediglich aufgrund eins passiven Gasaustausches, hervorgerufen durch Konvektion und Diffussion entlang von Konzentrationsgradienten, ergibt. Konzentrationsgradienten entstehen dabei aufgrund einer Quellen- und Senkenfunktion des eingelagerten Lagergutes (z.B. durch Abgabe oder Aufnahme von Feuchtigkeit). Zusätzlich unterstützt wird der Luftaustausch zwischen dem Innenraum des Behälters 15 und dessen Umgebung durch die Anordnung des Behälters 15 im Bodenbereich des Kühlraumes 13, insbesondere durch die Anordnung der Öffnung 21 unterhalb eines nicht dargestellten, den Kühlraum 13 kühlenden Verdampfers infolge des durch den Verdampfer hervorgerufenen, die Luft im Kühlraum 13 umwälzenden Kaltluftstromes, welcher außerdem zur Kühlung der im Behälter 15 eingelagerten Nahrungsmittel dient. Noch intensiver und gezielter herbeiführbar ist der Luftaustausch im Innenraum 19.1 des Behälters 15 für den Fall, daß dieser in einem Kühlraum 13 eingesetzt ist, innerhalb welchem die Kühlluft anhand eines Ventilators zwangsweise umgewälzt wird. Durch die zwangsweise Luftumwälzung anhand eines Ventilators ist es auch möglich, den Behälter 15 im Gegensatz zu der lediglich aufgrund des höheren spezifischen Gewichtes der Kaltluft auftretenden statischen Konvektion in irgendeiner Höhenlage innerhalb des Kühlraumes 13 anzuordnen.

Zur Intensivierung des Luftaustausches im Behäiterinnenraum, insbesondere bei autarken Behältern wie Brotkästen oder dergleichen, wäre es auch vorstellbar, den Behälterinnenraum anhand eines am Behälter oder zumindest in dessen Nahbereich angeordneten Ventilators zu belüften.

## Patentansprüche

1. Behälter (15) zur Einlagerung von Nahrungsmitteln mit einem Behälterraum (19.1) und wenigstens einer Öffnung (21), deren Luftdurchlassfläche mit einem Verschlusselement (25) veränderbar ist, welches durch Antriebsmittel (28) betätigt ist, welche von einer Datenauswerteeinheit (30) gesteuert sind, welche zur Steuerung Steuerwerte durch einen Vergleich zwischen in einem Datenspeicher hinterlegten Referenzdaten und erfassten Daten bildet, **dadurch gekennzeichnet, dass** im Behälterraum (19.1) Mittel (31, 32, 33) zur Erfassung der im Behälterraum herrschenden, die Daten bildenden Luftzusammensetzung und Feuchte angeordnet sind.

2. Behälter nach Anspruch 1, **dadurch gekennzeichnet, dass** die Mittel (31, 32, 33) zur Erfassung der Luftzusammensetzung und Feuchte im Nahbereich der Öffnung (21) im Behälterinnenraum (19.1) angeordnet sind.

3. Behälter nach Anspruch 1, **dadurch gekennzeichnet, dass** die Mittel (31, 32, 33) zur Erfassung der Luftzusammensetzung und Feuchte im Behälterinnenraum (19.1) verteilt angeordnet sind.

4. Behälter nach einem der Ansprüche 1 bis 3, **dadurch gekennzeichnet, dass** neben den Mitteln (31, 32, 33) zur Erfassung der Luftzusammensetzung und Feuchte im Behälterinnenraum (19.1) weitere Mittel (31, 32, 33) vorgesehen sind, welche das Umgebungsklima des Behälters zu erfassen vermögen.

5. Behälter nach Anspruch 4, **dadurch gekennzeichnet, dass** die weiteren Mittel (31, 32, 33) an der vom Behälterraum abgewandten Außenseite des Behälters (15), zumindest im Nahbereich der vom Verschlusselement (25) veränderbaren Luftdurchlassfläche angeordnet sind.

6. Behälter nach Anspruch 4, **dadurch gekennzeichnet, dass** die weiteren Mittel (31, 32, 33) verteilt im nahen Außenbereich des Behälters (15) angeordnet sind.

7. Behälter nach einem der Ansprüche 1 bis 6, **dadurch gekennzeichnet, dass** die Mittel (31, 32, 33) bzw. die weiteren Mittel (31, 32, 33) zur Erfassung der Luftzusammensetzung und Feuchte bzw. des Umgebungsklimas Gassensoren (33), Feuchtesensoren (31) und Temperatursensoren (32) umfassen.

8. Behälter nach Anspruch 7, **dadurch gekennzeichnet, dass** die Gassensoren (33) als wenigstens Sauerstoff und Kohlendioxid zu erfassen vermögende Sensoren ausgebildet sind.

9. Behälter nach einem der Ansprüche 7 oder 8, **dadurch gekennzeichnet, dass** die Gassensoren (33) als Halbleiterbauelemente oder Infrarotstrahlung absorbierende Bauelemente ausgebildet sind.

10. Behälter nach Anspruch 7, **dadurch gekennzeichnet, dass** die Temperatursensoren (32) als Halbleiterbauelemente ausgebildet sind.

11. Behälter nach Anspruch 7, **dadurch gekennzeichnet, dass** die Feuchtesensoren (31) als Impedanz-Sensoren ausgebildet sind.

12. Behälter nach Anspruch 7, **dadurch gekennzeichnet, dass** die Feuchtesensoren (31) als poröse Festkörper-Dielektrika ausgebildet sind.

13. Behälter nach einem der Ansprüche 1 bis 3, **dadurch gekennzeichnet, dass** neben den Mitteln (31, 32, 33) zur Erfassung der Luftzusammensetzung und Feuchte im Behälterinnenraum (19.1) wenigstens ein Geruchssensor zur Erfassung von Gerüchen im Behälterraum vorgesehen ist.

14. Behälter nach Anspruch 1, **dadurch gekennzeichnet, dass** die Antriebsmittel (28) zur Betätigung des Verschlusselementes (25) durch einen Mikroaktor gebildet sind.

15. Behälter nach Anspruch 14, **dadurch gekennzeichnet, dass** der Mikroaktor hinsichtlich seiner Verstellbewegung durch Positionssensoren überwacht ist.

16. Behälter nach Anspruch 15, **dadurch gekennzeichnet, dass** die Positionssensoren dem Mikroaktor zugeordnet sind.

17. Behälter nach einem der Ansprüche 1 bis 16, **dadurch gekennzeichnet, dass** die Mittel (31, 32, 33) zur Erfassung der Luftzusammensetzung und Feuchte im Behälterinnenraum (19.1) und/oder die weiteren Mittel (31, 32, 33) zur Erfassung des Umgebungsklimas mit den Antriebsmitteln (28) eine Baueinheit (29) bilden.

18. Behälter nach Anspruch 17, **dadurch gekennzeichnet, dass** die Baueinheit (29) lösbar am Behälter angeordnet ist.

19. Behälter nach einem der Ansprüche 17 oder 18 mit einer durch eine verschwenkbare Klappe abgedeckte Öffnung, **dadurch gekennzeichnet, dass** die Baueinheit (29) am Öffnungsrand des Behälters (15) lösbar gehaltert und die Öffnung (21) durch das Verschwenken der Klappe erzeugt ist.

20. Behälter nach Anspruch 1, **dadurch gekennzeichnet, dass** die Öffnung (21) im Behälter (15) durch zumindest in annähernd gleichen Winkelständen voneinander beabstandete kreissektorförmige Aussparungen (23) gebildet ist.

21. Behälter nach Anspruch 20, **dadurch gekennzeichnet, dass** die kreissektorförmigen Aussparungen (23) durch kreissefctortörmige, an einem als Verschlußelement dienenden scheibenartigen Halter (25) angeordnete Abdeckelemente (26) abdeckbar sind.

22. Behälter nach einem der Ansprüche 1 oder 20, **dadurch gekennzeichnet, daß** neben der mit einer veränderbaren Luftdurchlaßfläche ausgestatteten Öffnung (21) eine weitere Öffnung am Behälter (15) vorgesehen ist

23. Behälter nach Anspruch 22, **dadurch gekennzeichnet, dass** die weitere Öffnung einen bezüglich der veränderbaren Öffnung (21) verkleinerten Öffnungsquerschnitt atifweist.

24. Behälter nach einem der Ansprüche 22 oder 23, **dadurch gekennzeichnet, dass** die weitere Öffnung durch ein von einem Antriebsmittel betätigtes Verschlusselement abdeckbar ist, wobei das Antriebsmittel von der Datenauswerteeinheit (30) gesteuert ist.

25. Behälter nach Anspruch 1 oder 24, **dadurch gekennzeichnet, dass** die Datenauswerteeinheit (30) als programmierbarer Mikrocomputer ausgebildet ist.

26. Behälter nach Anspruch 25, **dadurch gekennzeichnet, dass** der Mikrocomputer mit einem Eingabemodul datentechnisch verbunden ist, mit welchem die Art des einzulagernden Nahrungsmittels anhand von kennzeichnenden Eckdaten in den Mikrocomputer eingebbar sind und dass der Mikrocomputer nach einem Vergleich der eingegebenen Daten mit in einer Speichereinheit des Mikrocomputers hinterlegten Referenzdaten die Einstellung des Verschlusselements (25) selbsttätig steuert.

27. Behälter nach einem der Ansprüche 1, 24 oder 25, **dadurch gekennzeichnet, dass** die Datenauswerteeinheit (30) und die Antriebsmittel (28) durch wenigstens eine Solarzelle (34) mit elektrischer Spannung versorgt sind.

28. Behälter nach Anspruch 27, **dadurch gekennzeichnet, dass** die Solarzelle (34) an einem Akkumulator angeschlossen ist, welcher für die von der Solarzelle (34) erzeugten Energie als Zwischenpuffer dient.

29. Kältegerät mit einem wärmeisolierenden Gehäuse und wenigstens einem darin angeordneten, von einer wärmeisolierenden Tür verschließbaren Kühlraum, **dadurch gekennzeichnet, dass** der Kühlraum (13) mit einem Behälter (15) nach einem der Ansprüche 1 bis 26 ausgestattet ist.

## Claims

1. Container (15) for storage of foodstuffs, with a container chamber (19.1) and at least one opening (21), the air throughflow area of which is variable by a closure element (25) actuated by drive means (28) controlled by a data evaluating unit (30), which, for the control, forms control values by a comparison between reference data filed in a data store and detected data, **characterised in that** means (31, 32, 33) for detection of the air composition and moisture prevailing in the container chamber and forming the data are arranged in the container chamber (19.1).

2. Container according to claim 1, **characterised in that** the means (31, 32, 33) for detection of the air composition and moisture are arranged in the vicinity of the opening (21) in the container interior space (19.1).

3. Container according to claim 1, **characterised in that** the means (31, 32, 33) for detection of the air composition and moisture are arranged distributed in the container interior space (19.1).

4. Container according to one of claims 1 to 3, **characterised in that** apart from the means (31, 32, 33) for detection of the air composition and moisture in the container interior space (19.1) further means (31, 32, 33) are provided, which are capable of detecting the ambient climate of the container.

5. Container according to claim 4, **characterised in that** the further means (31, 32, 33) are arranged at the outer side, which is remote from the container chamber, of the container (15) at least in the proximity of the air throughflow area variable by the closure element (25).

6. Container according to claim 4, **characterised in that** the further means (31, 32, 33) are arranged distributed in the adjacent outer region of the container (15).

7. Container according to one of claims 1 to 6, **characterised in that** the means (31, 32, 33) and the further means (31, 32, 33) for, respectively, detection of the air composition and moisture and detection of the ambient climate comprise gas sensors (33), moisture sensors (31) and temperature sensors (32).

8. Container according to claim 7, **characterised in that** the gas sensors (33) are constructed as sensors capable of detecting at least oxygen and carbon dioxide.

9. Container according to one of claims 7 and 8, **characterised in that** the gas sensors (33) are constructed as semiconductor components or components absorbing infrared radiation.

10. Container according to claim 7, **characterised in that** the temperature sensors (32) are constructed as semiconductor components.

11. Container according to claim 7, **characterised in that** the moisture sensors (31) are constructed as impedance sensors.

12. Container according to claim 7, **characterised in that** the moisture sensors (31) are constructed as porous solid body dielectrics.

13. Container according to one of claims 1 to 3, **characterised in that** apart from the means (31, 32, 33) for detection of the air composition and moisture in the container interior space (19.1) at least one odour sensor for detection of odours in the container chamber is provided.

14. Container according to claim 1, **characterised in that** the drive means (28) for actuation of the closure element (25) are formed by a micro-actuator.

15. Container according to claim 14, **characterised in that** the micro-actuator is monitored with respect to its adjustment movement by position sensors.

16. Container according to claim 15, **characterised in that** the position sensors are associated with the micro-actuator.

17. Container according to one of claims 1 to 16, **characterised in that** the means (31, 32, 33) for detection of the air composition and moisture in the container interior space (19.1) and/or the further means (31, 32, 33) for detection of the ambient climate form a constructional unit (29) together with the drive means (28).

18. Container according to claim 17, **characterised in that** the constructional unit (29) is detachably arranged at the container.

19. Container according to one of claims 17 and 18 with an opening covered by a pivotable flap, **characterised in that** the constructional unit (29) is detachably mounted at the opening edge of the container (15) and the opening (21) is produced by the pivotation of the flap.

20. Container according to claim 1, **characterised in that** the opening (21) in the container (15) is formed by cut-outs (23) of circular sectorial shape mutually spaced-apart at at least approximately equal angular positions.

21. Container according to claim 20, **characterised in that** the cut-outs (23) of circularly sector shape can be covered by cover elements (26) of circularly sectorial shape arranged at a plate-like mount (25) serving as closure element.

22. Container according to one of claims 1 and 20, **characterised in that** apart from the opening (21) equipped with a variable air throughflow area a further opening is provided at the container (15).

23. Container according to claim 22, **characterised in that** the further opening has an opening cross-section reduced relative to the variable opening (21).

24. Container according to one of claims 22 and 23, **characterised in that** the further opening can be covered by a closure element actuated by a drive means, wherein the drive means is controlled by the data evaluating unit (30).

25. Container according to claim 1 or 24, **characterised in that** the data evaluating unit (30) is constructed as a programmable microcomputer.

26. Container according to claim 25, **characterised in that** the microcomputer is connected in terms of data with an input module, by which the form of foodstuff to be stored can be input into the microcomputer on the basis of characterising comer data and that the microcomputer automatically controls the setting of the closure element (25) after a comparison of the input data with reference data filed in a memory unit of the microcomputer.

27. Container according to one of claims 1, 24 and 25, **characterised in that** the data evaluating unit (30) and the drive means (28) are supplied with electrical voltage by at least one solar cell (34).

28. Container according to claim 27, **characterised in that** the solar cell (34) is connected with a battery which serves as an intermediate buffer for the energy produced by the solar cell (34).

29. Cooling appliance with a thermally insulating housing and at least one cooling chamber which is arranged therein and is closable by a thermally insulating door, **characterised in that** the cooling chamber (13) is equipped with a container (15) according to one of claims 1 to 26.

## Revendications

1. Contenant (15) pour le stockage de produits alimentaires comprenant un compartiment intérieur (19.1) et au moins une ouverture (21) dont la surface de passage de l'air peut être modifiée par un élément d'obturation (25), actionné par des moyens d'entraînement (28), commandés par une unité d'évaluation des données (30), qui forme des données de commande pour la commande par comparaison de données de référence mémorisées dans une mémoire de données et de données saisies, **caractérisé en ce que** des moyens (31, 32, 33) pour la détection de la composition de l'air et de l'humidité formant les données et régnant dans le compartiment intérieur du contenant, sont disposés dans le compartiment intérieur du contenant (19.1).

2. Contenant selon la revendication 1, **caractérisé en ce que** les moyens (31, 32, 33) pour la détection de la composition de l'air et de l'humidité sont disposés dans le compartiment intérieur du contenant (19.1) à proximité de l'ouverture (21).

3. Contenant selon la revendication 1, **caractérisé en ce que** les moyens (31, 32, 33) pour la détection de la composition de l'air et de l'humidité sont disposés de manière répartie dans le compartiment intérieur du contenant (19.1).

4. Contenant selon l'une des revendications 1 à 3, **caractérisé en ce que** à côté des moyens (31, 32, 33) pour la détection de la composition de l'air et de l'humidité dans le compartiment intérieur du contenant (19.1), des moyens supplémentaires (31, 32, 33) sont prévus, lesquels sont capables de détecter le climat ambiant du contenant.

5. Contenant selon la revendication 4, **caractérisé en ce que** les moyens supplémentaires (31, 32, 33) sont disposés à la face extérieure du contenant (15) opposée au compartiment intérieur du contenant, au moins à proximité de la surface de passage de l'air modifiable par l'élément d'obturation (25).

6. Contenant selon la revendication 4, **caractérisé en ce que** les moyens supplémentaires (31, 32, 33) sont disposés de manière répartie dans la zone extérieure proche du contenant (15).

7. Contenant selon l'une des revendications 1 à 6, **caractérisé en ce que** les moyens (31, 32, 33) resp. les moyens supplémentaires (31, 32, 33) pour la détection de la composition de l'air et de l'humidité resp. du climat ambiant comprennent des capteurs de gaz (33), des capteurs d'humidité (31) et des capteurs de température (32).

8. Contenant selon la revendication 7, **caractérisé en ce que** les capteurs de gaz (33) sont conçus comme capteurs capables de détecter au moins l'oxygène et le gaz carbonique.

9. Contenant selon l'une des revendications 7 ou 8, **caractérisé en ce que** les capteurs de gaz (33) sont conçus comme composants semi-conducteurs ou comme composants absorbant le rayonnement infrarouge.

10. Contenant selon la revendication 7, **caractérisé en ce que** les capteurs de température (32) sont conçus comme composants semi-conducteurs.

11. Contenant selon la revendication 7, **caractérisé en ce que** les capteurs d'humidité (31) sont conçus comme capteurs à impédance.

12. Contenant selon la revendication 7, **caractérisé en ce que** les capteurs d'humidité (31) sont conçus comme diélectriques solides poreux.

13. Contenant selon l'une des revendications 1 à 3, **caractérisé en ce que** à côté des moyens (31, 32, 33) pour la détection de la composition de l'air et de l'humidité dans le compartiment intérieur du contenant (19.1) au moins un capteur olfactif est prévu pour la détection des odeurs dans le compartiment intérieur du contenant.

14. Contenant selon la revendication 1, **caractérisé en ce que** les moyens d'entraînement (28) pour l'actionnement de l'élément d'obturation (25) est constitué par un microactionneur.

15. Contenant selon la revendication 14, **caractérisé en ce que** le microactionneur est contrôlé par des capteurs de position en ce qui concerne son mouvement de réglage.

16. Contenant selon la revendication 15, **caractérisé en ce que** les capteurs de position sont affectés au microactionneur.

17. Contenant selon l'une des revendications 1 à 16, **caractérisé en ce que** les moyens (31, 32, 33) pour la détection de la composition de l'air et de l'humidité dans le compartiment intérieur du contenant (19.1) et/ou les moyens supplémentaires (31, 32, 33) pour la détection du climat ambiant constituent une unité modulaire (29) avec les moyens d'entraînement (28).

18. Contenant selon la revendication 17, **caractérisé en ce que** l'unité modulaire (29) est disposée sur le contenant de manière détachable.

19. Contenant selon l'une des revendications 17 ou 18 comprenant une ouverture recouverte par un clapet orientable, **caractérisé en ce que** l'unité modulaire (29) est maintenue de manière détachable au bord d'ouverture du contenant (15) et **en ce que** l'ouverture (21) est créée par le basculement du clapet.

20. Contenant selon la revendication 1, **caractérisé en ce que** l'ouverture (21) dans le contenant (15) est formée par des évidements (23) en forme de secteur circulaire espacés les uns des autres par des écarts angulaires approximativement similaires.

21. Contenant selon la revendication 20, **caractérisé en ce que** les évidements (23) en forme de secteur circulaire peuvent être recouverts par des éléments de recouvrement (26) disposés sur un support (25) en forme de disque servant d'élément d'obturation.

22. Contenant selon l'une des revendications 1 ou 20, **caractérisé en ce que** à côté de l'ouverture (21) dotée d'une surface de passage de l'air variable, une ouverture supplémentaire est prévue sur le contenant (15).

23. Contenant selon la revendication 22, **caractérisé en ce que** l'ouverture supplémentaire comporte une section d'ouverture réduite par rapport à l'ouverture variable (21).

24. Contenant selon l'une des revendications 22 ou 23, **caractérisée en ce que** l'ouverture supplémentaire peut être recouverte par un élément d'obturation actionné par un moyen d'entraînement, le moyen d'entraînement étant commandé par l'unité d'évaluation des données (30).

25. Contenant selon la revendication 1 ou 24, **caractérisé en ce que** l'unité d'évaluation des données (30) est conçue comme micro-ordinateur programmable.

26. Contenant selon la revendication 25, **caractérisé en ce que** le micro-ordinateur est relié par voie informatique à un module d'entrée à l'aide duquel il est possible d'entrer dans le micro-ordinateur le type de produit alimentaire à stocker à l'aide de données de référence caractérisantes et **en ce que** le micro-ordinateur commande automatiquement le réglage de l'élément d'obturation (25) après une comparaison des données saisies avec des données de référence mémorisées dans une unité de mémorisation du micro-ordinateur.

27. Contenant selon l'une des revendications 1, 24 ou 25, **caractérisé en ce que** l'unité d'évaluation des données (30) et les moyens d'entraînement (28) sont alimentés en tension électrique par au moins une cellule solaire (34).

28. Contenant selon la revendication 27, **caractérisé en ce que** la cellule solaire (34) est raccordée à un accumulateur, qui sert de mémoire tampon pour l'énergie produite par la cellule solaire (34).

29. Réfrigérateur équipé d'une enceinte calorifuge et d'au moins une enceinte frigorifique disposée dans celui-ci et pouvant être fermée par une porte calorifuge, **caractérisé en ce que** l'enceinte frigorifique (13) est équipée d'un contenant (15) selon l'une des revendications 1 à 26.
